# EUROPEAN PATENT APPLICATION

(11) **EP 4 672 113 A1**
(43) Date of publication of application: **31.12.2025**
(21) Application number: 24184476.0
(22) Date of filing: 25.06.2024
(51) Int. Cl.: G06Q 10/20, G06Q 50/08

(54) **MONITORING METHOD FOR A BUILDING AND CORRESPONDING SYSTEM**

(71) Applicant: Siemens Schweiz AG, 8047 Zürich (CH)
(72) Inventor: Chekalin, Victor, 02-495 Warszaw (PL); Vaikar, Susmita, 6037 Root (CH)
(74) Representative: Siemens Patent Attorneys

(57) **Abstract**

The invention relates to a monitoring method for a building (10), the method comprising the steps:
- acquiring (S1) at least one BIM model (30) of a building (10), wherein the at least one BIM model (20) comprises a plurality of components (39-45) and/or areas (31-38) corresponding to components (19-25) and/or areas (11-18) of the building (10),
- generating (S2) a view (50) of the building (10) based on the at least one BIM model (30) and displaying (S3) the view (50) of the building (10) on a display unit (4),
- monitoring (S4) the plurality of components (19-25) and/or areas (11-18) of the building (10) and determining (S5) real time data and/or static data of the plurality of components (19-25) and/or areas (11-18),
- selecting (S6) a subset (31, 37, 41) of the plurality of components (39-45) and/or areas (31-38) of the at least one BIM model (30) based on the determined real time data and/or static data of the components (19-25) and/or areas (11-18) of the building (10), and
- highlighting (S7) the selected subset (31, 37, 41, 51, 57, 61) of the plurality of components (39-45) and/or areas (31-38) within the view (50) of the building (10).

## Description

The present invention relates to a monitoring method for a building. Moreover, the invention relates to a monitoring system for a building. Further, the invention relates to a computer program product comprising a program code for executing such a monitoring method.

Buildings are complicated and have a lot of equipment, for example components like heating or cooling pipes, ventilators, or any other kind of system or device being integrated into a building. Visualization (so called building information modeling, BIM) or digital representation (so called digital twin) of a building can be used for virtually navigating through a building for example for commissioning, operation and maintenance. However, when equipment or components are hidden behind walls or ceilings, and a user must know the exact location to navigate to such equipment. This may be particularly critical for equipment that need attention due to an error or need focus for other important reasons.

It should be noted that, independent of the grammatical term usage, individuals with male, female or other gender identities are included within the term.

Currently used BIM based applications may connect to real time information from components or devices of the building and may directly go to a location and explore the area corresponding to the respective device for problems. This is useful for monitoring a specific device if the exact location of this device is known. However, when the exact location is not known, currently used systems or applications are not able to show the device causing or having problems. Further, current systems or applications are not able to have an overlook over all devices causing or having problems throughout the whole building.

Thus, it is one object of the present invention to provide a possibility of monitoring a whole building with respect to current conditions of components within the building using a digital representation of the building.

According to a first aspect, a monitoring method for a building is provided. The method comprises the steps:
- acquiring at least one BIM (building information modeling) model of a building, wherein the at least one BIM model comprises a plurality of components and/or areas corresponding to components and/or areas of the building,
- generating a view of the building based on the least one BIM model and displaying the BIM model of the building on a display,
- monitoring the plurality of components and/or areas of the building and determining real time data and/or static data of the plurality of components and/or areas,
- selecting a subset of the plurality of components and/or areas of the at least one BIM model based on the determined real time data and/or static data of the components and/or areas of the building, and
- highlighting the selected subset of the plurality of components and/or areas within the view of the building.

In the first step, at least one BIM model is acquired. A BIM model of a building is a digital representation of a building, transferring all properties of the real life building into the virtual reality. The BIM model thus represents all physical properties and characteristics of the building, including the building itself (walls, floors, doors, stairs etc.) as well as all components and/or areas inside the building. The components may be any kind of element or device within the building, like pipes, ventilators, electrical systems or devices, including wiring, etc. The areas may be for example rooms within the building, zones (i.e., defined areas which can combine several rooms or can be arbitrarily chosen and can overlap rooms and/or be only partially include a room), or any suitable region within a building, such as the staircase, etc. The method may acquire one or more BIM models, wherein each BIM model may comprise some or all of the components and/or areas of the building. Thus, when more than one BIM model is used, one BIM model may comprise only components, whereas another may comprise only areas (like a floor plan of the building), another may comprise a combination of components and/or areas, another may comprise specific components etc.

The view, which is generated and then displayed, may be based on at least one BIM model. When more than one BIM model is acquired, the view may be based on a combination of the BIM models.

When the building is monitored, real time data and/or static data of the building, i.e., its components and/or areas, may be determined from the physical building and may be transferred into the BIM model. The real time data may for example be acquired or captured from sensors within the building or may be retrieved directly from the respective components.

When a component is monitored, the relevant real time data may originate from this component. When an area is monitored which encompasses several components, real time data of the area as well as real time data of several components may contribute to the real time data of this area.

In order to be able to monitor the whole building or at least to have an overlook over a part of the building, the method selects a subset of the components and/or areas based on the real time data. For example, the selected subset may comprise components and/or areas having a specific status. Such a specific status or condition may for example be a status or condition requiring attention, e.g., for maintenance purposes. The condition or status may be characterized by a combination of real time and static data, depending on the component or area in question.

It should be noted that, when components/and or areas are selected based on real time data and/or static data of the components and/or areas of the building, the components and/or areas of the building as well as of the BIM model are selected. This is the case as the BIM model reflects the real life building and its areas and components. Further, when components and/or areas of the BIM model or the building are selected, this selection may be transferred to the view of the building as described in the following with respect to highlighting some components and/or areas.

Subsequently, for providing this information to a user, the method highlights the selected subset of components and/or areas within the displayed view of the building or BIM model, respectively. Thus, a user will be able to have an overlook over the selected components and/or areas of the entire building as they are shown within the whole view of the building. Therefore, it is not necessary to navigate to these components and/or areas as it was the case in previous systems. Further, as the selection is based on real time data, the user will see the components and/or areas which are currently relevant.

It is also possible to select components based on static data, for example selecting to highlight all heating pipes. A selection and highlighting based on current real time data was not provided. Further, selecting the subset of the plurality of components and/or areas may be based on the determined real time data and static data of the plurality of components and/or areas. Thus, also a combination of real time data and static data of the plurality of components and/or areas may be used. The highlighting of the selected subset of the plurality of components and/or areas may thus reflect the dynamic real time data as well as the static data.

Thus, the herein provided method is able to provide a flexible selection and display of components and/or areas based on currently relevant information, i.e. real time and/or static data.

According to a further embodiment, the non-selected components and/or areas of the plurality of components and/or areas are displayed transparently or gray-scaled in the view of the building. Further, other parts of the building or the BIM model, such as walls, doors, etc., can also be displayed transparently or gray-scaled. When the non-selected components and/or areas or other parts of the building are displayed transparently, the selected components and/or areas may be seen also when they are hidden behind non-selected components and/or areas or hidden behind other parts of the building like walls, doors, etc. This provides a kind of X-ray mode of the view of the building and the BIM model. When the non-selected components and/or areas or other parts of the building are displayed gray-scaled, the selected components and/or areas may be seen more easily in comparison as they are highlighted. Preferably, annotations, object tags or the like, which are associated with the non-selected components and/or area, may be visible or may not be visible when the non-selected components and/or areas are transparently shown. This may depend on a configuration, for example on a user configuration.

According to a further embodiment, the method further comprises configuring a degree of transparency of the transparently displayed components and/or areas or other parts of building. This means that the non-selected components and/or areas may be shown more or less visible, i.e., more or less transparent. This may depend on a user choice or may depend on any other configuration of the view and/or the BIM model. This provides a very flexible and configurable display of the building and the BIM model.

According to a further embodiment, highlighting the selected subset of the plurality of components and/or areas comprises coloring and/or animating the selected subset of the plurality of components and/or areas. Thus, the components and/or areas may be shown in different colors or may be shown using any kind of animation, for example blinking or flickering, or may be shown using a combination of different colors and animation. The kind of animation and/or coloring may be chosen for example based on a user's choice or may be chosen based on the kind of component and/or area and or may be chosen based on any predefined rule as will be described in the following.

According to a further embodiment, coloring and/or animating the selected subset of the plurality of components and/or areas comprises selecting a color and/or animation mode based on a predefined rule. For example, such a predefined rule may define that components of a specific kind, such as all lights, are shown in a specific color or a certain group of areas is highlighted in one color and another group is highlighted in a different color. Other rules are also possible. Depending on the rule, the display of the components and/or areas may provide an easy and comfortable overview of the building to a user, where for example the user can easily identify components or areas based on the color and/or animation.

For example, when the static data refers to the kind of component and the real time data represents the current condition of the components, all components of the same type, e.g. the ventilation system of the building, may be highlighted in the same color shade (such as green, yellow, etc.) and the condition may be reflected by adjusting the brightness (light green, dark green, etc.) and/or the animation (flickering). Other combinations of reflecting the real time data and static data using highlighting are also possible.

According to a further embodiment, such animation and/or color rules may be defined by a user. For example, such rules may be introduced into the BIM model via an application programming interface. This provides an easy way of developing and enhancing the BIM model and the monitoring method.

According to a further embodiment, the method further comprises adjusting the color and/or animation of the coloring and/or animating of a component and/or area of the subset of the plurality of components and/or areas based on a current condition of the determined real time data and/or static data of the component and/or area of the subset of the plurality of components and/or areas. As the color and/or animation may be adjusted based on a current condition of the component and/or area, the color and/or animation may also change when the condition changes. For example, when a component is in good condition, it may be colored in green and when the condition changes to a bad condition, the color may change to red. Other conditions and colors or animations are also possible. Further, the above-mentioned rules may be a combination of conditions of components and/or areas or may be based on values or properties of components and/or areas. Thus, the user can easily identify components or areas as wells as their corresponding condition based on the color and/or animation.

According to a further embodiment, the color and/or animation associated with a specific condition, component and/or area may be defined by a user, for example via a user input configuring the highlighting. Such a configuration may be implemented for example using a scripting language. Thus, the user can adapt the monitoring method and the BIM model as well as the generated view of the building according to the requirements of the user.

According to a further embodiment, the configuration may define default highlighting, e.g., default animations and/or colors, for well-defined use cases based on disciplines, such as Fire, HVAC, Security, Electricity, etc. Such a use case may be for example using the color red for all fire equipment/components having a fault state, using the color yellow for all electrical equipment/components that are nearing their maintenance date, using the color red for all equipment/components that are nearing their maintenance data and for which the warranty expires, etc.

According to a further embodiment, animations and/or colors indicating alarms of components and/or areas or indicating conditions of components and/or areas that need attention may be defined based on a combination of parameters customizable for each component and/or area. The animations and/or colors may also be combined for indicating the alarms and/or conditions. There can be different views (for example duplicate visualization for the same building) with a combination of same or different disciplines such as HVAC (Heating, Ventilation and Air Conditioning), Fire, Arch etc. Different animations indicating different problems of interest can be maintained for each of these views. This provides an easy and ascertainable overview of the building.

According to a further embodiment, the current condition is compared with predefined conditions for a component and/or area. The predefined conditions may be stored in a database and may be retrieved for comparing with the current condition.

According to a further embodiment, the current condition corresponds to an alarm condition of the component and/or area of the subset of the plurality of components and/or areas. Such an alarm condition may be a condition which needs to be reviewed in further detail and/or which may require any action, for example maintenance, of the corresponding component or area. Thus, the user may easily identify critical conditions of the building and its components or areas.

According to a further embodiment, the method further comprises switching highlighting on or off according to a user input. This may be implemented for example when the user has chosen a specific view of the BIM model and wants to see the components and/or areas without highlighting.

According to a further embodiment, the real time data of the plurality of components and/or areas are current parameter values of the plurality of components and/or areas. Such parameters and their corresponding values may be any kind of parameters which are able to indicate a condition or status of the components and/or areas. The parameters may be captured for example via sensors or may be retrieved from the components.

According to a further embodiment, the method further comprises switching the view of the building between a 2D and a 3D view whilst maintaining the highlighted subset of the plurality of components and/or areas. When the display of the BIM model, i.e. the view of the building based on the at least one BIM model, or the visualization is switched to 2D from 3D and vice versa, the animation and/or colors are continued to be displayed for the current area or component. Panels with real time information of components, which may be displayed together with the BIM model may be displayed when the displayed view is near the corresponding component, i.e., when the user or the displayed section is near the component. As explained above, this information might not be display during the transparent mode.

According to a further embodiment, the method further comprises changing between a private mode and a public mode. In public mode, the user may publish the BIM model or the selected subset of components and/or areas to other users. In private mode, sharing the BIM model or the selected subset of components and/or areas may be restricted or completely prevented. The change between private and public mode may be initiated by an administrator of the BIM model. Thus, it can be prevented that confidential information of the building and its components or areas is published.

According to a further embodiment, displaying the view of the building comprises initially displaying the view of the building with a default camera position. This camera position may be the standard view when starting displaying the BIM model or the view of the building.

It should be noted that the method steps as described above may be carried out in any suitable order and/or may be carried out at least partially at the same time.

According to a further aspect, a monitoring system for a building is provided. The system comprises an acquisition unit for acquiring at least one BIM model of a building, wherein the at least one BIM model comprises a plurality of components and/or areas corresponding to components and/or areas of the building, a display unit for generating a view of the building based on the at least one BIM model and for displaying the view of the building, a monitoring unit for monitoring the plurality of components and/or areas of the building and determining real time data and/or static data of the plurality of components and/or areas, , and a processing unit for selecting a subset of the plurality of components and/or areas of the at least one BIM model based on the determined real time data and/or static data of the components and/or areas of the building and for highlighting the selected subset of the plurality of components and/or areas within the view of the building.

The embodiments and features described with reference to the method of the present invention apply mutatis mutandis to the system of the present invention.

The respective entity, e.g., the acquisition unit or the monitoring unit, may be implemented in hardware and/or in software. If said entity is implemented in hardware, it may be embodied as a device, e.g., as a computer or as a processor or as a part of a system, e.g., a computer system. If said entity is implemented in software, it may be embodied as a computer program product, as a function, as a routine, as a program code or as an executable object.

By the above-described monitoring method and monitoring system, a flexible and user-friendly overview of a building and its components and/or areas may be provided. For example, components and/or areas that need attention may be identified combining static and dynamic information via various options like animations and/or colors to best visualize it wholistically in 2D and 3D using a transparent or X-ray mode.

According to a further aspect, the invention relates to a computer program product comprising a program code for executing the above-described monitoring method for a building when run on at least one computer.

A computer program product, such as a computer program means, may be embodied as a memory card, USB stick, CD-ROM, DVD or as a file which may be downloaded from a server in a network. For example, such a file may be provided by transferring the file comprising the computer program product from a wireless communication network.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
- Fig. 1: shows a sequence of steps of a monitoring method for a building;
- Fig. 2: a schematic block diagram of a monitoring system for a building; and
- Figs. 3a-3c: show different schematic examples of a model of a building as displayed using the method of Fig. 1 and/or the system of Fig. 2.

In the Figures, like reference numerals designate like or functionally equivalent elements, unless otherwise indicated.

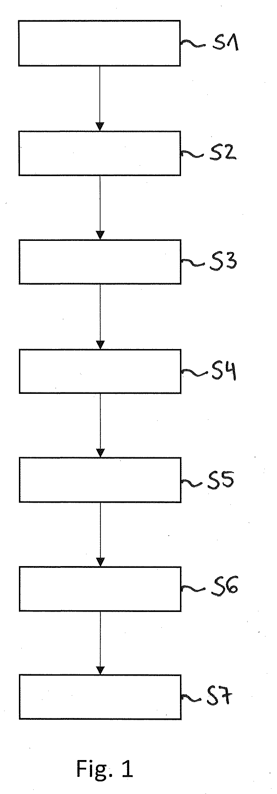

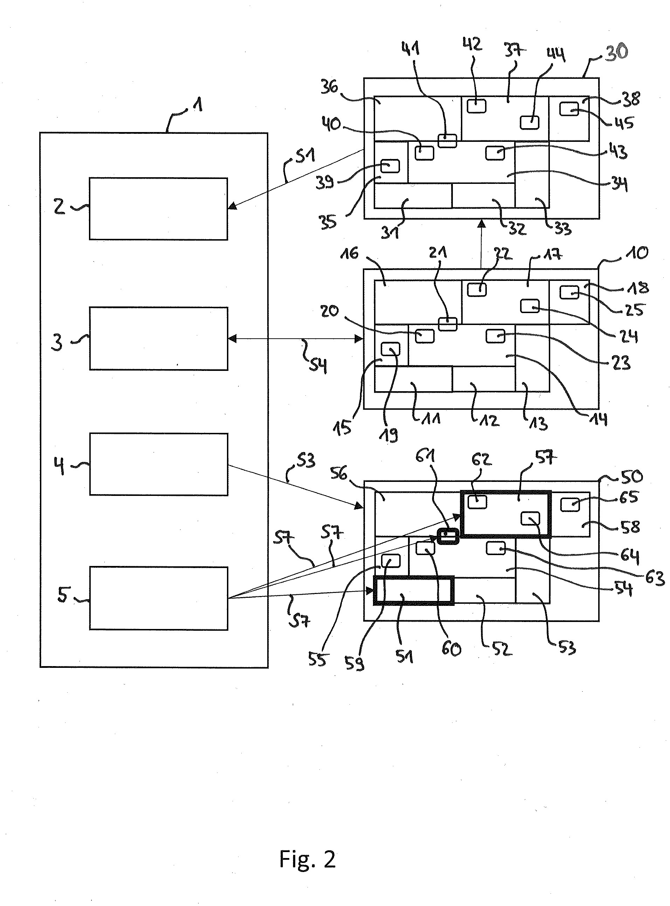

Fig. 1 shows a monitoring method and Fig. 2 shows a corresponding monitoring system 1 for monitoring a building 10 as shown in Fig. 2.

The building 10 comprises a plurality of components 19-25 and/or areas 11-18 or other parts or elements (e.g. walls, doors, etc.). The components 19-25 may be any kind of device or system being integrated in the building 10, such as pipes, ventilators or ventilation systems, wiring, etc. The areas 11-18 may be specific zones or regions within the building 10, for example rooms, staircases, etc. For illustrative purposes, the components 19-25 and areas 11-18 are shown as blocks within the building 10, but it should be understood that the building may have a three-dimensional arrangement of the components 19-25 and areas 11-18. To indicate the three-dimensional arrangement, some of the components, areas or other parts of the building are overlapping. For example, component 21 may be hidden under areas 14, 16.

In a first step S1, a BIM model 30 of the building 10 is acquired (for example by the acquisition unit 2 of the system 1). The BIM model 30 is a virtual or digital representation of the building 10 in real life. Thus, the BIM model 30 comprises a plurality of components 39-45 and/or areas 31-38 corresponding to the components 19-25 and/or areas 11-18 of the building 10.

A view 50 the building 10 may be generated (step S2) based on the BIM model 30. It should be noted that, although only one BIM model 30 is shown, the real life building 10 may be represented by more than one BIM model 30. In this case, for generating the view 50, the more than one BIM models 30 may be combined. When displaying the view 50 of the building 10, which is based on the BIM model 30, in step S3, the view 50 and its components 59-65 and areas 51-58 are displayed on a display unit 4 of the system 1 in a 3D or 2D version.

For providing information on the building 10, in particular for monitoring the building 10, the method comprises a further step S4 of monitoring the plurality of components 19-25 and/or areas 11-18 of the building 10 using a monitoring unit 3 of the system 1. This may be done by determining S5 real time data of the plurality of components 19-25 and/or areas 11-18 for example using sensors within the building 10 or by retrieving information from the components 19-25 and/or areas 11-18.

In order to transfer the monitored information of the building 10 to the BIM model 30 and the displayed view 50 of the building 10, respectively, the method further comprises selecting S6 a subset 31, 37, 41 of the plurality of components 39-45 and/or areas 31-38 of the BIM model 30 based on the determined real time data of the components 19-25 and/or areas 11-18 of the building 10. This may be done for example by using a processing unit 5 of the system 1. The processing unit 5 may select some of the components and/or areas for example based on a condition of the components and/or areas. In the example shown herein, the components 41 or the areas 31, 37 may have a condition which should be illustrated within the view 50 of the building 10. The condition may be for example indicative for a warning or alarm condition requiring an action such as a maintenance operation.

To indicate the selected components and/or areas 31, 37, 41 on the display unit 4, the processing unit 5 can highlight S7 the selected subset 31, 37, 41, 51, 57, 61 of the plurality of components 59-65 and/or areas 51-58 within the view 50 of the building 10. This highlighting is indicated in Fig. 2 by the blocks 51, 57, 61 having a thicker border than the remaining blocks.

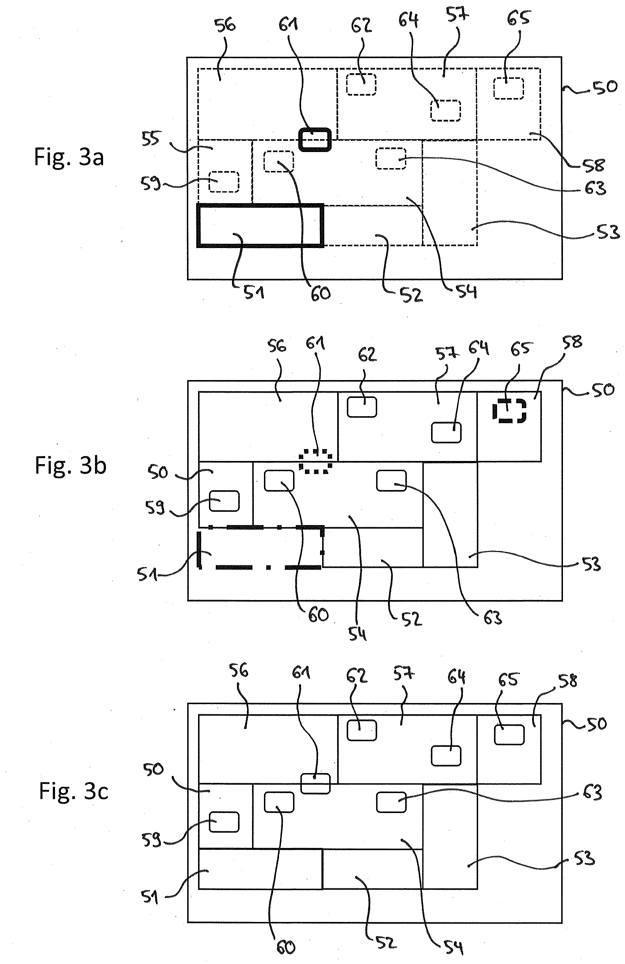

Highlighting components 59-65 and/or areas 51-58 may be done in various ways, for example by using different colors or animations, as will be explained based on some examples with reference to Figs. 3a to 3c.

As can be seen in Fig. 3a, some components/areas 51, 61 are highlighted, for example using a color. In contrast to the selected subset of components and/or areas 51, 61 which are highlighted, the remaining components 52-58 and/or areas 59, 60, 62-65 or any other part of the view 50 of the building 10 may be made transparent or gray-scaled as indicated by the light dotted lines in Fig. 3a. As can be seen, making for example components, areas or other parts of the displayed view 50 transparent provides the advantage that the components 51, 61 can be better seen as they are hidden behind some of the other elements.

Further, the selected components and/or areas 51, 61 can be highlighted in different ways, as indicated in Fig. 3b using different kinds of thickness and dotted lines. For example, component 61 may be highlighted using a specific color, whereas area 51 may be highlighted using a different color, and component 65 may be highlighted using an animation like flickering. Other kinds of highlighting as well as different combinations of highlighting are also possible.

As shown in Fig. 3c, the highlighting of components 59-65 and/or areas 51-58 may also be switched off or may be not present when none of the components and/or areas is selected.

It should be noted that any combination of the examples of Figs. 3a to 3c as well as any other kind of highlighting is possible.

As the method and system 1 provide a monitoring of the building 10 and illustrating the monitoring of the building 10 in a view 50 using a BIM model 30 based on real time data, the displayed view 50 provides a current overview of the building 10 with real time data information. Further, due to the highlighting, a user may have a fast and comprehensive overview of the building 10.

Although the present invention has been described in accordance with preferred embodiments, it is obvious for the person skilled in the art that modifications are possible in all embodiments.

### List of Reference

- 1: monitoring system
- 2: acquisition unit
- 3: monitoring unit
- 4: display unit
- 5: processing unit
- 10: building
- 11-18: areas
- 19-25: components
- 30: BIM model
- 31-38: areas
- 39-45: components
- 50: view of the building
- 51-58: areas
- 59-65: components
- S1-S7: method steps

## Claims

1. A monitoring method for a building (10), the method comprising the steps:
- acquiring (S1) at least one BIM model (30) of a building (10), wherein the at least one BIM model (20) comprises a plurality of components (39-45) and/or areas (31-38) corresponding to components (19-25) and/or areas (11-18) of the building (10),
- generating (S2) a view (50) of the building (10) based on the at least one BIM model (30) and displaying (S3) the view (50) of the building (10) on a display unit (4),
- monitoring (S4) the plurality of components (19-25) and/or areas (11-18) of the building (10) and determining (S5) real time data and/or static data of the plurality of components (19-25) and/or areas (11-18),
- selecting (S6) a subset (31, 37, 41) of the plurality of components (39-45) and/or areas (31-38) of the at least one BIM model (30) based on the determined real time data and/or static data of the components (19-25) and/or areas (11-18) of the building (10), and
- highlighting (S7) the selected subset (31, 37, 41, 51, 57, 61) of the plurality of components (39-45) and/or areas (31-38) within the view (50) of the building (10).

2. The monitoring method according to claim 1, **characterized in that** the non-selected components (39, 40, 42-45) and/or areas (32-36, 38) of the plurality of components (39-45) and/or areas (31-38) and/or other parts of the building (10) are displayed transparently or gray-scaled in the view (50) of the building (10).

3. The monitoring method according to claim 2, **characterized in that** the method further comprises configuring a degree of transparency of the transparently displayed components (39, 40, 42-45) and/or areas (32-36, 38) or other parts of the building (10).

4. The monitoring method according to any one of the preceding claims, **characterized in that** highlighting the selected subset (31, 37, 41, 51, 57, 61) of the plurality of components (39-45) and/or areas (31-38) comprises coloring and/or animating the selected subset (31, 37, 41, 51, 57, 61) of the plurality of components (39-45) and/or areas (31-38).

5. The monitoring method according to claim 5, **characterized in that** coloring and/or animating the selected subset (31, 37, 41, 51, 57, 61) of the plurality of components (39-45) and/or areas (31-38) comprises selecting a color and/or animation mode based on a predefined rule.

6. The monitoring method according to claim 4 or 5, **characterized in that** the method further comprises adjusting the color and/or animation of the coloring and/or animating of a component (41, 61) and/or area (31, 37, 51, 57) of the subset (31, 37, 41, 51, 57, 61) of the plurality of components (39-45) and/or areas (31-38) based on a current condition of the determined real time data of the components (21, 41, 61) and/or areas (11, 17, 31, 37, 51, 57) of the subset (31, 37, 41, 51, 57, 61) of the plurality of components (39-45) and/or areas (31-38).

7. The monitoring method according claim 6, **characterized in that** the current condition is compared with predefined conditions for a component (21, 41, 61) and/or area (11, 17, 31, 37, 51, 57).

8. The monitoring method according to claim 6 or 7, **characterized in that** the current condition corresponds to an alarm condition of the component (21, 41, 61) and/or area (11, 17, 31, 37, 51, 57) of the subset (31, 37, 41, 51, 57, 61) of the plurality of components (39-45) and/or areas (31-38).

9. The monitoring method according to any one of the preceding claims, **characterized in that** the method further comprises switching highlighting on or off according to a user input.

10. The monitoring method according to any one of the preceding claims, **characterized in that** the real time data of the plurality of components (39-45) and/or areas (31-38) are current parameter values of the plurality of components (39-45) and/or areas (31-38).

11. The monitoring method according to any one of the preceding claims, **characterized in that** the method further comprises switching the view (50) of the building (10) between a 2D and a 3D view whilst maintaining the highlighted subset (31, 37, 41, 51, 57, 61) of the plurality of components (39-45) and/or areas (31-38).

12. The monitoring method according to any one of the preceding claims, **characterized in that** the method further comprises changing between a private mode and a public mode.

13. The monitoring method according to any one of the preceding claims, **characterized in that** displaying (S4) the view (50) of the building (10) comprises initially displaying the view (50) of the building (10) with a default camera position.

14. A monitoring system (1) for a building (10), the system (1) comprising:
- an acquisition unit (2) for acquiring (S1) at least one BIM model (30) of a building (10), wherein the at least one BIM model (30) comprises a plurality of components (39-45) and/or areas (31-38) corresponding to components (19-25) and/or areas (11-18) of the building (10),
- a display unit (4) for generating (S2) a view (50) of the building (10) based on the least one BIM model (30) and for displaying (S3) the view (50) of the building (10),
- a monitoring unit (3) for monitoring (S4) the plurality of components (19-25) and/or areas (11-18) of the building (10) and determining (S5) real time data and/or static data of the plurality of components (19-25) and/or areas (11-18), and
- a processing unit (5) for selecting (S6) a subset (31, 37, 41, 51, 57, 61) of the plurality of components (39-45) and/or areas (31-38) of the at least one BIM model (30) based on the determined real time data and/or static data of the components (19-25) and/or areas (11-18) of the building (10) and for highlighting (S7) the selected subset (31, 37, 41, 51, 57, 61) of the plurality of components (39-45) and/or areas (31-38) within the view (50) of the building (10).

15. Computer program product comprising a program code for executing the monitoring method for a building according to any one of the claims 1 to 13 when run on at least one computer.
